# EUROPÄISCHE PATENTSCHRIFT

(11) **EP 3 323 616 B1**
(45) Veröffentlichungstag und Bekanntmachung des Hinweises auf die Patenterteilung: **25.08.2021**
(21) Anmeldenummer: 17179843.2
(22) Anmeldetag: 05.07.2017
(51) Int. Cl.: B33Y 30/00, B33Y 10/00, B33Y 40/00, B29C 64/153, B29C 64/268, B29C 64/295, B29C 64/364, B22F 3/105, B22F 10/10

(54) **VERFAHREN UND VORRICHTUNG ZUR ADDITIVEN HERSTELLUNG EINES DREIDIMENSIONALEN OBJEKTS**
METHOD AND APPARATUS FOR ADDITIVE MANUFACTURING OF A THREE-DIMENSIONAL OBJECT
PROCÉDÉ ET DISPOSITIF DE FABRICATION ADDITIVE D'UN OBJET TRIDIMENSIONNEL

(30) Priorität: 21.11.2016 DE 102016122368
(43) Veröffentlichungstag der Anmeldung: 23.05.2018
(73) Patentinhaber: CL Schutzrechtsverwaltungs GmbH, 96215 Lichtenfels (DE)
(72) Erfinder: Dr. Pontiller-Schymura, Peter, 95512 Neudrossenfeld (DE); Döhler, Tim, 96269 Großheirath (DE); Popp, Alexandra, 96231 Bad Staffelstein (DE)
(74) Vertreter: Hafner & Kohl PartmbB

(56) Entgegenhaltungen:
- EP-A1- 0 863 806
- DE-A1-102013 011 675
- US-A1- 2009 283 501
- US-A1- 2012 237 745
- US-A1- 2013 064 706

## Beschreibung

Die Erfindung betrifft zunächst ein Verfahren zur additiven Herstellung eines Objektes mit den weiteren Merkmalen des Oberbegriffes des Anspruchs 1. Zudem betrifft die Erfindung eine Vorrichtung mit den Merkmalen des Anspruchs 13.

Angesprochen ist insbesondere das technische Gebiet der sogenannten 3D-Druckverfahren, insbesondere das Gebiet des selektiven Laserschmelzens (SLM) oder selektiven Lasersinterns (SLS). Die Erfindung schließt aber auch sogenannte Stereolithographieverfahren und zugehörige Vorrichtungen mit ein, bei denen flüssiges oder pastoses Baumaterial ebenfalls durch Einwirkung von Strahlungsenergie in einen verfestigten Zustand überführt wird, um daraus schichtweise dreidimensionale Objekte herzustellen.

Bei all diesen Verfahren werden Baumaterialschichten auf eine Oberfläche oder eine bereits verfestigte Werkstückfläche aufgetragen oder in einem Baumoduldurch Absenken einer Haltevorrichtung bereits verfestigter Teile erzeugt. Diese Schichten werden prozessgesteuert dadurch verfestigt, dass ein fokussierter Strahl einer geeigneten Strahlquelle an die zu verfestigenden Stellen der Baumaterialschicht auftritt und diese Stellen der Baumaterialschicht verfestigt, d. h. insbesondere ansintert oder aufsintert, aufschmilzt oder durchschmilzt. Hierzu wird ein Datensatz bereitgestellt, der das additiv herzustellende Objekt beschreibt.

Allen Verfahren liegt dabei die Erkenntnis zugrunde, dass durch einen gewissen Energieeintrag, insbesondere bei SLM- oder SLS-Verfahren, das Baumaterial über einen Verfestigungspunkt, insbesondere einen Schmelzpunkt, gebracht wird. Ein sich bildender Schmelzepool, der sich nicht nur innerhalb der zu verfestigenden Baumaterialschicht bildet, sondern bis in wenigstens eine darunter liegende Baumaterialschicht reicht, führt dazu, dass das Baumaterial sich verfestigt, wobei bei SLM-Verfahren die pulverartige Struktur aufgelöst wird. Bei SLS-Verfahren können die Pulverkörner des Baumaterials wenigstens zum Teil beibehalten werden.

Es ist als Stand der Technik bereits bekannt, das Baumaterial vorzuwärmen bzw. vorzuheizen. Dies geschieht entweder über eine gesonderte Beheizung des Baumaterials über die Bauplatte, alternativ durch eine Heizung des Baumaterials über die Kammerwand der Baukammer oder durch eine Heizung des Baumaterials über dessen Oberfläche, wobei bei all diesen Verfahren das gesamte in der Baukammer angeordnete Baumaterial angewärmt wird. Weiterhin ist es auch bereits bekannt geworden, das Baumaterial nur lokal vorzuwärmen und dabei darauf zu achten, dass dessen Schmelzpunkt nicht überschritten wird. Eine lokale Aufwärmung des Baumaterials kann dabei durch den Baulaser erfolgen, wobei vorbestimmte Positionen einer Werkstoffschicht jeweils mehrfach bestrahlt werden. Bei einer ersten Bestrahlung wird das Baumaterial zunächst auf eine Temperatur unterhalb der Schmelztemperatur gebracht, bei einem nachfolgenden Bestrahlungsvorgang auf eine Temperatur oberhalb der Schmelztemperatur (EP 1 568 472 B1). Ein derartiges Vorgehen erfordert eine komplexe Führung des Laserstrahls über die zu verfestigenden Baumaterialschichten, der Strahl muss z. B. mäanderförmige Bewegungen ausführen, die vor- und rückwärts gerichtet sind. Dadurch kann die Steuerung des Bauvorgangs erschwert und der Bauvorgang verzögert werden.

US 2013/064706 A1 offenbart eine optische Bestrahlungseinheit für eine Anlage zur Herstellung von Werkstücken durch Bestrahlen von Pulverschichten eines Rohstoffpulvers mit Laserstrahlung.

EP 0863806 A1 offenbart eine additive Fertigungseinrichtung.

US 2012/237745 offenbart einen Keramik- oder Glaskeramikgegenstand sowie in Verfahren zu dessen Herstellung.

DE 10 2013 011 675 A1 offenbart ein Verfahren zur additiven bzw. generativen Bauteilfertigung.

US 2009/283501 A1 offenbart ein Verfahren zur Laserabscheidung zur Herstellung und/oder Reparatur eines Bauteils

Der Erfindung liegt die Aufgabe zugrunde, ein Verfahren mit den Merkmalen des Oberbegriffs des Anspruchs 1 derart zu gestalten, dass es einfacher und schneller durchgeführt werden kann. Eine Vorrichtung zur Durchführung des Verfahrens soll ebenfalls vereinfacht werden.

Diese Aufgabe wird durch die Merkmale der unabhängigen Patentansprüche gelöst. Vorteilhafte Weiterbildungen der Erfindung ergeben sich aus den Unteransprüchen.

Als Kern der Erfindung wird es angesehen, dass der Heizstrahl, der für ein Erwärmen bzw. eine Vorheizung, mithin zum An- oder Aufwärmen des Baumaterials (unterhalb dessen Verfestigungstemperatur) zuständig ist, den Hauptstrahl, der für eine Aufschmelzung oder Sinterung des Baumaterials zuständig ist, umgibt oder unmittelbar vor oder nach dem Hauptstrahl bezogen auf die Verfestigungsspur, d. h. insbesondere Schmelz- oder Sinterspur, herläuft, wobei er zusammen mit dem Hauptstrahl synchron über die Oberfläche geführt wird.

Dies hat - was das Verfahren anbelangt - den großen Vorteil, dass zunächst Baumaterialbereiche, die zunächst nicht zur Verfestigung vorgesehen werden, nicht mit vorgeheizt werden und deswegen das Baumaterial in diesen Bereichen unbeeinflusst von irgendeiner Wärmeeinwirkung für weitere Bauprozesse eingesetzt werden kann.

Thermisch induzierte (mechanische) Spannungen im Bauteil werden aufgrund verringerter Temperaturgradienten vermieden, ebenso Spannungen im Bauteil aufgrund thermischer Ausdehnungen.

Die Maßhaltigkeit des Bauteils wird erhöht. Eine Schwindung beim Fest-Flüssig-Übergang des Schmelzebads wird vermieden, weil die Umgebung des Schmelzebads bereits eine angehobene Temperatur hat. Insgesamt werden Spannungen abgebaut. Gasporen durch Trocknung der Pulver können vermieden werden, eine Versprödung des Bauteils durch Reduktion von Abkühlraten wird erreicht ebenso wie eine Veränderung des Bauteils durch Thermoschock.

Da das Baumaterial nur dort vorgewärmt wird, wo in unmittelbarer Umgebung sodann die Verfestigung erfolgt, wird die Materialbelastung durch Verringerung der thermischen Zyklierung reduziert.

Was die Vorrichtung anbelangt, so ist die Vorrichtung einfach gestaltet, insbesondere die Steuerung der Scannerelemente, insbesondere der Scannerspiegel. Beide Strahlen, die voneinander losgelöste Aufgaben bzw. Funktionen haben, können über ein und denselben Scannerspiegel gleichzeitig geführt werden. Ein, insbesondere steuerungstechnisch, komplexes Nacheinanderführen des Haupt- und Heizstrahls ist für das Verfahren nicht notwendig.

Der Heizstrahl kann auf unterschiedliche Weise erzeugt werden. Einerseits ist eine Auskopplung des Heizstrahls aus dem Hauptstrahl möglich, dies kann durch einen Strahlteiler geschehen, der ausgekoppelte Strahl wird typischerweise durch eine Aufweitungsoptik geführt, sodass der Heizstrahl einen größeren Strahldurchmesser aufweist als der Hauptstrahl. Die Strahlen können durch eine Strahlkopplereinrichtung, kurz einen Strahlkoppler, wieder zusammengeführt werden und gelangen nach dem Strahlkoppler z. B. in einen Scanner, der beide Strahlen simultan und gegebenenfalls gleichgerichtet auf die Bauteiloberfläche leitet.

Es ist aber auch möglich, unterschiedliche Strahlungsquellen zur Erzeugung von Haupt- und Heizstrahl zu verwenden. Diese können dann auch unterschiedliche Wellenlängenbereiche haben, falls dies für die Erwärmung oder Aufschmelzung des Baumaterials zweckdienlich ist.

Die Strahlen können koaxial liegend auf das Baumaterial geführt werden, d. h. der Heizstrahl hat (weitgehend) einen kreisförmigen Querschnitt, der Hauptstrahl, typischerweise ebenso mit einem (weitgehend) kreisförmigen Querschnitt, wird (im Wesentlichen) im Zentrum des Hauptstrahls geführt. Es ist aber auch möglich, z. B. den Heizstrahl in elliptischer Form auf die Baumaterialoberfläche treffen zu lassen und den Hauptstrahl im Bereich der Ellipse weiter vorne oder hinten anzuordnen, damit z. B. die Einwirkung des Heizstrahls vor Verfestigung des Baumaterials durch den Hauptstrahl etwas länger und intensiver vorgenommen wird. Auch ist es möglich, Hauptstrahl und Heizstrahl auseinanderliegend, d. h. räumlich getrennt, mit knappem Abstand auf die Baumaterialoberfläche treffen zu lassen.

Es ist dabei möglich, die Dezentralisierung oder Fokusform von Haupt- und Heizstrahl prozessgesteuert zu verändern. Der Heizstrahl ist aber so bezogen auf den Hauptstrahl zu formen und zu führen, dass lediglich die direkte Umgebung des Hauptstrahls oder ein Vor- oder Nachlaufbereich bezogen auf den Hauptstrahl erwärmt wird. Erfindungsgemäß wird das Verhältnis der Strahlteilung sowie die Spotgröße der beiden auf die Baumaterialoberfläche treffenden Strahlen (Hauptstrahl und Heizstrahl) prozessgesteuert variiert.

Um die auf die Baumaterialoberfläche auftreffende Heizstruktur zu erzeugen, muss eine Vorrichtung wenigstens eine Strahlquelle aufweisen und wenigstens einen Strahlkoppler, der die beiden Strahlen (Hauptstrahl und Heizstrahl) so zusammenführt, dass sie gemeinsam ineinanderliegend oder mit einstellbarem Abstand auf die Baumaterialoberfläche fallen können.

Nicht notwendigerweise muss dazu ein Scanner eingesetzt werden, es ist auch möglich, diese ineinander oder aneinander liegende Strahlstruktur durch Verfahren einer Optik über der Baumaterialoberfläche zu steuern oder eine Vielzahl von Strahlungsquellen gezielt ein- und auszuschalten.

Die Erfindung wird anhand von Ausführungsbeispielen in den Zeichnungsfiguren näher erläutert. Diese zeigen:
- Fig. 1: eine schematische Darstellung einer Vorrichtung zur Durchführung des Verfahrens in einer ersten Ausführungsform;
- Fig. 1a: eine schematische Darstellung der Auftreffbereiche von Hauptstrahl und Heizstrahl in einer ineinander liegenden Anordnung;
- Fig. 1b: eine schematische Darstellung der Auftreffbereiche von Hauptstrahl und Heizstrahl, wobei der Heizstrahl vor dem Hauptstrahl vorauseilend angeordnet ist;
- Fig. 2: eine schematische Darstellung einer Vorrichtung zur Durchführung des Verfahrens mit zwei Strahlquellen;
- Fig. 3: eine schematische Darstellung einer Vorrichtung zur Durchführung des Verfahrens mit einer Mehrzahl von Strahlquellen zur Erzeugung des Haupt- und Heizstrahl;
- Fig. 3a: eine schematische Ansicht der auf einem Träger angeordneten Strahlquellen;
- Fig. 4: eine schematische Darstellung von ineinander liegenden Auftreffbereichen von Haupt- und Heizstrahl, wobei der Hauptstrahl in der Auftrefffläche des Heizstrahls dezentral angeordnet ist;
- Fig. 5: eine schematische Darstellung der Auftreffbereiche von Haupt- und Heizstrahl, wobei der Heizstrahl in einer elliptischen Fläche auf die Baumaterialoberfläche fällt und der Heizstrahl jeweils in einem Endbereich der Ellipse angeordnet ist;
- Fig. 6: eine schematische Darstellung der Auftreffbereiche von Haupt- und Heizstrahl, wobei die Form des Heizstrahls im Auftreffbereich auf die Baumaterialoberfläche veränderbar ist;
- Fig. 7: eine schematische Darstellung der Auftreffbereiche von Haupt- und Heizstrahl, wobei der Heizstrahl vorauseilend an den Hauptstrahl angrenzt;
- Fig. 8: eine Darstellung gemäß Fig. 7, wobei der Heizstrahl in elliptischer Form auf die Baumaterialoberfläche fällt.

Zunächst wird auf Zeichnungsfigur 1 Bezug genommen.

Die in Zeichnungsfigur 1 dargestellte Vorrichtung 1 weist ein zeichnerisch nur angedeutetes Gehäuse 2 auf, in dem ein Bauraum 3 und eine Prozesskammer 4 angebracht sind. In dem Bauraum 3 ist eine Tragevorrichtung 5 zum Tragen eines herzustellenden Objekts 6 angeordnet. Die Tragevorrichtung 5 weist einen höhenverstellbaren Träger 7 auf. Neben dem Bauraum 3 ist eine Dosiereinrichtung 8 angeordnet, von der Baumaterial 9 mittels einer z. B. horizontal verfahrbaren Aufbringvorrichtung 20 schichtweise auf die Tragevorrichtung 5 oder eine zuvor gebildete Schicht aufgebracht werden kann.

In oder über der Prozesskammer 4 ist eine Bestrahlungsvorrichtung 10 vorgesehen, die zum Bestrahlen der Schichten des Baumaterials 9 dient. Die Bestrahlungsvorrichtung 10 umfasst in dem Ausführungsbeispiel einen Laser 11 und einen Scanner 12, wobei die Spiegel des Scanners 12 über eine nur angedeutete Prozesssteuereinrichtung 13 auf Grundlage eines das additiv herzustellende dreidimensionale Objekt 6 beschreibenden Datensatzes gesteuert werden.

In dem Gehäuse 2 ist ferner eine Einrichtung 15 zur bereichsweisen Erwärmung, insbesondere Vor- oder Nachwärmung, von Abschnitten einer Baumaterialschicht vorgesehen.

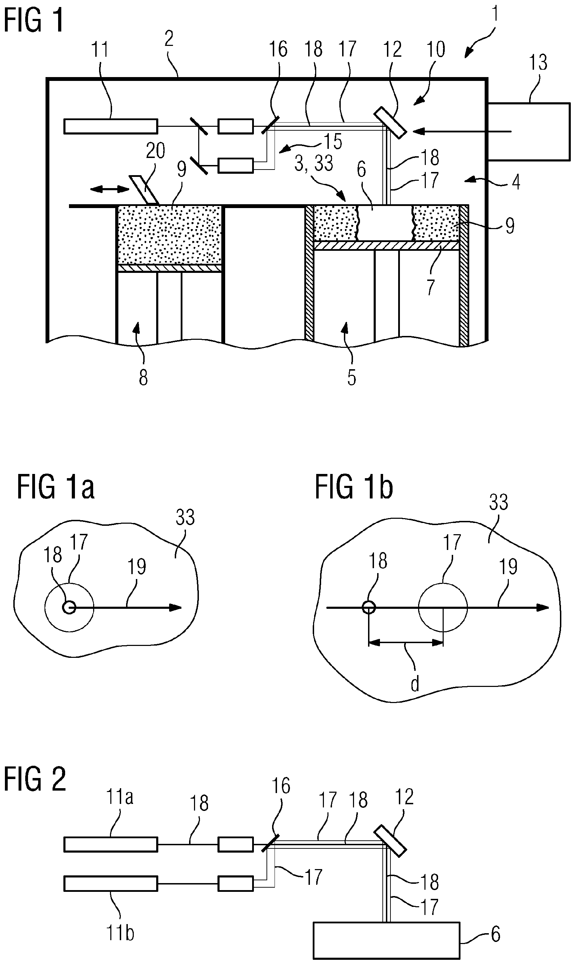

Bei dem in Fig. 1. gezeigten Ausführungsbeispiel umfasst die Einrichtung 15 wenigstens eine Strahlkopplereinrichtung 16 mit welcher ein zur Erwärmung der Materialoberflächenbereiche vorgesehener Heizstrahl 17 mit einem einen Sinter- oder Schmelzvorgang des Baumaterials bewirkenden Hauptstrahl 18 derart zusammenführbar ist, dass beide Strahlen gemeinsam und synchron über zu erwärmende oder zu verfestigende Oberflächenbereiche der Baumaterialschicht geführt werden können, wobei der Fokus des Hauptstrahls 18 entweder innerhalb des Durchmessers des Heizstrahls 17 oder angrenzend oder unmittelbar benachbart an den Durchmesser des Heizstrahls 18 geführt ist.

In Fig. 1a ist eine Anordnung von Hauptstrahl 18 und Heizstrahl 17 gezeigt, wobei der Auftreffpunkt des Hauptstrahls 18 auf der Oberfläche der Baumaterialschicht zentral im Auftreffdurchmesser des Heizstrahls 17 angeordnet ist. Fig. 1b zeigt hingegen eine beabstandete Anordnung von Haupt- und Heizstrahl 18, 17, wobei der Auftreffpunkt des Heizstrahls 17 mit geringem Abstand vom Auftreffpunkt des Hauptstrahls 18 angeordnet ist und dem Hauptstrahl 18 in Spurrichtung 19 voreilt.

In Fig. 2 sind im Wesentlichen nur die Elemente der Bestrahlungsvorrichtung 10 und der Einrichtung 15 zur Erwärmung dargestellt. Im Gegensatz zu dem Ausführungsbeispiel, das in Fig. 1 dargestellt ist, umfasst die Vorrichtung 1 gemäß Fig. 2 zwei Strahlquellen, nämlich einen ersten Laser 11a und einen zweiten Laser 11b, wobei der erste Laser 11a den Hauptstrahl 18 erzeugt und der zweite Laser 11b zur Erzeugung des Heizstrahls 17 vorgesehen ist. Die beiden Strahlen 17 und 18 werden über eine Strahlkopplereinrichtung 16, kurz Strahlkoppler, vereinigt und wiederum dem Scanner 12 zugeführt, wo sie dann synchron und ineinanderliegend oder nahe aneinander angrenzend auf die Bauteiloberfläche geführt werden.

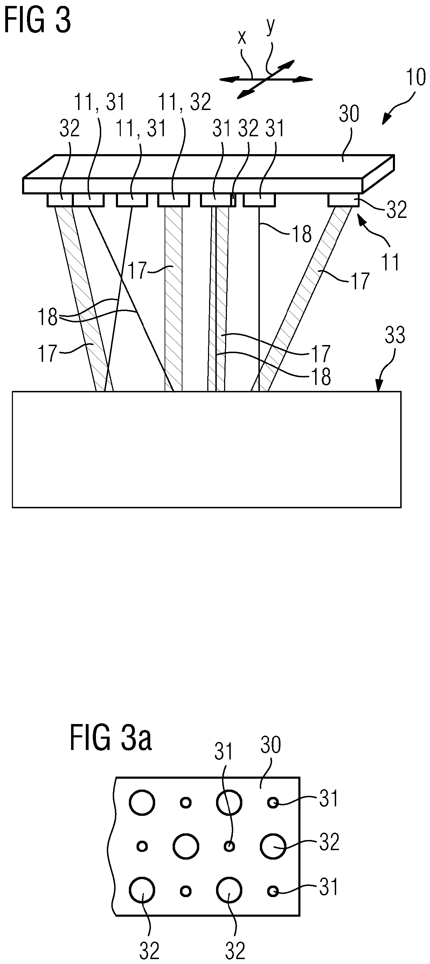

Bei dem in Fig. 3 dargestellten Ausführungsbeispiel ist eine Bestrahlungseinrichtung 10 mit einer Vielzahl an Strahlungsquellen bzw. Lasern 11 vorgesehen. Dabei werden Hauptstrahlen 18 durch eine erste Gruppe von auf einem Träger 30 angeordneten Lasern 31 und eine Gruppe von Heizstrahlen 17 von einer zweiten Gruppe von Lasern 32 erzeugt, die ebenfalls auf dem Träger 30 angeordnet ist. Haupt- und Heizstrahlen 18, 17 sind beispielhaft so gerichtet, dass jeweils ein Hauptstrahl 18 und ein Hauptstrahl 18 bereichsweise ineinander liegend oder nahe aneinander angrenzend auf die Baumaterialoberfläche 33 auftreffen. Der Träger 30 ist dabei an einer nicht näher erläuterten Kreuzschlittenanordnung angebracht und in X- und Y-Richtung über der Baumaterialoberfläche 33 verfahrbar.

Fig. 3a zeigt eine beispielhafte Anordnung der der ersten Gruppe zugehörigen Laser 31 und der der zweiten Gruppe zugehörigen Laser 32.

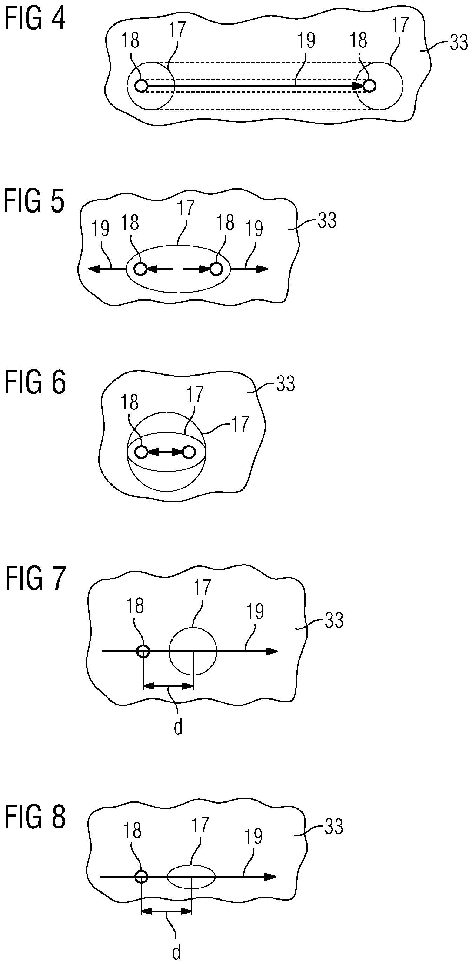

Die Fig. 4 - 8 zeigen noch unterschiedliche Auftreffpunkte von Haupt- und Heizstrahl 18, 17 in Aufsichten analog den Fig. 1a, 1b. In Fig. 4 trifft der Heizstrahl 17 kreisförmig auf die Baumaterialoberfläche 33, der Hauptstrahl 18 ist dezentral in der Auftrefffläche des Heizstrahls 17 derart angeordnet, dass ein größerer Bereich der Auftrefffläche des Heizstrahls 17 dem Hauptstrahl 18 in Spurrichtung 19 vorauseilt.

In Fig. 5 ist die Auftrefffläche des Heizstrahls 17 ellipsenförmig ausgebildet. Die Auftrefffläche des Hauptstrahls 18 liegt entweder in einem ersten Endbereich oder in einem gegenüberliegenden zweiten Endbereich der Auftreffellipse des Heizstrahls 17, je nachdem, ob die Spurrichtung 19 nach rechts oder links in der Fig. 5 verläuft.

In Fig. 6 ist dargestellt, dass die Auftrefffläche des Heizstrahls 17 prozessgesteuert (reversibel) von einer Kreisform in eine Ellipse verändert werden kann, ebenso wie der innerhalb der Auftrefffläche des Heizstrahls 17 liegende Auftreffpunkt des Hauptstrahls 18 (reversibel) in seiner Raumposition variiert werden kann.

In den Fig. 7 und 8 ist dargestellt, dass der Hauptstrahl 18 auch angrenzend an den Heizstrahl 17 auftreffen kann, wobei der Heizstrahl 17 in Fig. 7 eine Kreisform hat und der Heizstrahl 17 in Fig. 8 die Form einer angenäherten Ellipse. Die Distanz d zwischen Haupt- und Heizstrahl 18, 17 kann prozessgesteuert (reversibel) variiert werden. Wesentlich dabei ist, dass eine zusammen mit dem Hauptstrahl 18 über die Baufläche laufende Führung des Heizstrahls 17 erfolgt.

Die Spotgröße des Heizstrahls 17 ist beispielsweise größer gewählt als die des Hauptstrahls 18. Dadurch wird sichergestellt, dass nur die direkte Umgebung des Hauptstrahls 18 zum Zeitpunkt des Verfestigens, d. h. insbesondere des Schmelzens oder Sinterns, auch bezeichnet als "Schreiben" selektiv erwärmt wird. Die Verhältnisse der Strahlteilung sowie die Spotgrößen der Strahlen 17 und 18 können während des Prozesses variiert werden. Eine Erwärmung bzw. Vorheizung des Baumaterials 9 tritt typischerweise nur zum Zeitpunkt des eigentlichen Verfestigungsvorgangs, insbesondere des Schmelz- oder Sintervorgangs, oder kurz vorher und im Wesentlichen am gleichen Ort bzw. in der Nähe der Verfestigung statt.

## Patentansprüche

1. Verfahren zur additiven Herstellung eines dreidimensionalen Objekts (6), durch sukzessive schichtweise selektive Verfestigung von Schichten eines Baumaterials (9) mit wenigstens einem Energiestrahl, wobei die sukzessive schichtweise selektive Verfestigung des Baumaterials (9) aufgrund eines das additiv herzustellende dreidimensionale Objekt (6) umschreibenden Datensatzes erfolgt, wobei zur Sinterung und/oder Auf- oder Durchschmelzung vorgesehene Baumaterialbereiche in einem unterhalb der Verfestigungstemperatur des Baumaterials (9) liegenden Temperaturbereich erwärmt werden, wobei die Erwärmung des oder der Baumaterialbereiche durch wenigstens einen Heizstrahl (17) erfolgt, der wenigstens einen zum An-, Auf- oder Durchschmelzen eingesetzten Hauptstrahl (18) entweder bereichsweise umgibt oder dem Hauptstrahl (18) vor- oder nachläuft, wobei Hauptstrahl (18) und Heizstrahl (17) zusammen synchron über die Oberfläche des Baumaterials (9) geführt werden, **dadurch gekennzeichnet, daß** das Verhältnis der Strahlteilung in Hauptstrahl (18) und Heizstrahl (17) sowie die Spotgrößen des Hauptstrahls (18) und des Heizstrahls (17) auf der Baumaterialoberfläche während des Prozesses variiert werden.

2. Verfahren nach Anspruch 1, **dadurch gekennzeichnet, dass** der zum Erwärmen, insbesondere zum An- oder Aufwärmen, eingesetzte Heizstrahl (17) koaxial zum Hauptstrahl (18) geführt wird.

3. Verfahren nach Anspruch 2, **dadurch gekennzeichnet, dass** der Heizstrahl (17) aus dem zum An-, Auf- oder Durchschmelzen verwendeten Hauptstrahl (18) durch Strahlauskopplung gewonnen wird.

4. Verfahren nach einem der vorhergehenden Ansprüche, **dadurch gekennzeichnet, dass** der Heizstrahl (17) nach Abzweigung aus dem Hauptstrahl (18) durch eine Strahlaufweitungsoptik geführt wird.

5. Verfahren nach Anspruch 3 oder 4, **dadurch gekennzeichnet, dass** der Heizstrahl (17) mit dem Hauptstrahl (18) in einer Strahlkopplereinrichtung (16) wieder vereinigt wird.

6. Verfahren nach einem der vorhergehenden Ansprüche, **dadurch gekennzeichnet, dass** sowohl der Hauptstrahl (18) als auch als Heizstrahl (17) über ein und denselben Scanner (12) geführt werden.

7. Verfahren nach einem der vorhergehenden Ansprüche, **dadurch gekennzeichnet, dass** der Fokus des Hauptstrahls (18) innerhalb des Bestrahlungsbereiches des Heizstrahls (17) liegend auf die Baumaterialoberfläche geleitet wird.

8. Verfahren nach einem der vorhergehenden Ansprüche, **dadurch gekennzeichnet, dass** die ineinander liegende Anordnung des Hauptstrahls (18) und des Heizstrahls (17) auf der Baumaterialoberfläche prozessgesteuert verlagert oder dezentralisiert wird.

9. Verfahren nach einem der vorhergehenden Ansprüche, **dadurch gekennzeichnet, dass** der vom Heizstrahl (17) erfasste Umgebungsbereich der Baumaterialoberfläche größer, insbesondere wenigstens doppelt so groß, als der vom Hauptstrahl (18) erfasste Oberflächenbereich auf der Baumaterialschicht ist.

10. Verfahren nach einem der vorhergehenden Ansprüche, **dadurch gekennzeichnet, dass** durch den Heizstrahl (17) ausschließlich die direkte Umgebung des Hauptstrahls (18) zum Zeitpunkt des Verfestigungsvorgangs, insbesondere des Schmelz- oder Sintervorgangs, selektiv erwärmt wird.

11. Verfahren nach einem der vorhergehenden Ansprüche, **dadurch gekennzeichnet, dass** der Hauptstrahl (18) und der Heizstrahl (17) durch unterschiedliche Strahlquellen (11a, 11b) erzeugt werden, deren Strahlen in einer Strahlkopplereinrichtung (16) vor Auftreffen auf den Scanner (12) zusammengeführt werden.

12. Verfahren nach Anspruch 11, **dadurch gekennzeichnet, dass** die Strahlquelle (11a) des Hauptstrahls (18) und die Strahlquelle (11b) des Heizstrahls (17) mit unterschiedlicher Wellenlänge strahlen.

13. Vorrichtung (1) zur Durchführung des Verfahrens nach einem der Ansprüche 1 bis 12, mit einem Gehäuse (2), einer darin untergebrachten Prozesskammer (4) und einem Bauraum (3), in welchem eine Tragevorrichtung (5) mit einem höhenverstellbaren Träger (7) zum Tragen eines herzustellenden Objektes (6) angeordnet ist, einer Aufbringvorrichtung zum Aufbringen von Schichten des Baumaterials (9) auf die Tragevorrichtung (5) oder eine zuvor gebildete Schicht, einer Dosiereinrichtung (8) zur Zuführung des Baumaterials (9) sowie wenigstens einer Bestrahlungsvorrichtung (10) zum Bestrahlen von Schichten des Baumaterials (9) an den dem jeweiligen Querschnitt des Objektes (6) entsprechenden Stellen, wobei in dem Gehäuse (2) eine Einrichtung (15) zur bereichsweisen Vorwärmung von Abschnitten der Baumaterialschicht vorgesehen ist, wobei die Einrichtung (15) wenigstens eine Strahlkopplereinrichtung (16) umfasst, mit welcher ein zur Erwärmung, insbesondere An- oder Aufwärmung, der Baumaterialoberflächenbereiche vorgesehener Heizstrahl (17) mit einem einen Verfestigungsvorgang, insbesondere einen Sinter- oder Schmelzvorgang, des Baumaterials (9) bewirkenden Hauptstrahl (18) derart zusammenführbar ist, dass beide Heizstrahl (17) und Hauptstrahl (18) gemeinsam über zu erwärmende und zu verfestigende Baumaterialoberflächenbereiche führbar sind, wobei der Fokus des Hauptstrahls (18) im Auftreffbereich des Heizstrahls (17) auf der Oberfläche des Baumaterials (9) angeordnet ist, wobei der Heizstrahl (17) den zum An-, Auf- oder Durchschmelzen eingesetzten Hauptstrahl (18) entweder bereichsweise umgibt oder dem Hauptstrahl (18) vor- oder nachläuft, wobei Hauptstrahl (18) und Heizstrahl (17) zusammen synchron über die Oberfläche des Baumaterials (9) führbar sind, **dadurch gekennzeichnet, daß** das Verhältnis der Strahlteilung in Hauptstrahl (18) und Heizstrahl (17) sowie die Spotgrößen des Hauptstrahls (18) und des Heizstrahls (17) auf der Baumaterialoberfläche während des Prozesses variierbar sind.

## Claims

1. A method for additive manufacturing of a three-dimensional object (6) by successive, selective layer-by-layer solidification of layers of a construction material (9) by at least one energy beam, wherein the successive, selective solidification of the construction material (9) is carried out due to a data record describing the three-dimensional object to be additively manufactured (6), wherein construction material sections provided for sintering and/or melting on or melting through are heated in a temperature range lying below the solidification temperature of the construction material (9), wherein the heating of the construction material section(s) is carried out by at least one heating beam (17) either section-wise surrounding at least one main beam (18) provided for melting on or melting through or going ahead or following the main beam (18), wherein the main beam (18) and the heating beam (17) are together guided synchronously along the surface of the construction material (9); **characterized in that** the ratio of the beam splitting into the main beam (18) and the heating beam (17) as well as the spot sizes of the main beam (18) and the heating beam (17) on the construction material surface are varied during the process.

2. The method according to claim 1, **characterized in that** the heating beam (17) used for heating, especially for preheating or heating up, is coaxially guided to the main beam (18).

3. The method according to claim 2, **characterized in that** the heating beam (17) is obtained from the main beam (18) used for melting on, melting to or melting through by beam extraction.

4. The method according to any of the preceding claims, **characterized in that** the heating beam (17) is guided through a beam expansion optic after diverging from the main beam (18).

5. The method according to claim 3 or 4, **characterized in that** the heating beam (17) is reunited with the main beam (18) in a beam coupling device (16).

6. The method according to any of the preceding claims, **characterized in that** both the main beam (18) and the heating beam (17) are guided over one and the same scanner (12).

7. The method according to any of the preceding claims, **characterized in that** the focus of the main beam (18), lying within the irradiation section of the heating beam (17), is directed to the construction material surface.

8. The method according to any of the preceding claims, **characterized in that** the arrangement of the main beam (18) and the heating beam (17) inside each other is displaced or decentralized on the construction material surface in a process-controlled manner.

9. The method according to any of the preceding claims, **characterized in that** the surrounding area of the construction material surface covered by the heating beam (17) is larger, especially at least twice as large, than the surface area on the construction material layer covered by the main beam (18).

10. The method according to any of the preceding claims, **characterized in that** exclusively the direct surroundings of the main beam (18) are selectively heated by the heating beam (17) at the time of the solidification process, especially the melting or sintering process.

11. The method according to any of the preceding claims **characterized in that** the main beam (18) and the heating beam (17) are generated by different beam sources (11 *a,* 11 *b),* the beams thereof are brought together in a beam coupling device (16) prior to hitting the scanner (12).

12. The method according to claim 11, **characterized in that** the beam source (11 *a)* of the main beam (18) and the beam source (11 *b)* of the heating beam (17) irradiate at different wavelengths.

13. An apparatus (1) for performing the method according to any of claims 1 - 12, comprising a housing (2), a process chamber (4) accommodated therein, and a construction room (3), in which a carrying device (5) having a height adjustable carrier (7) for carrying an object to be manufactured (6) is arranged, an application device for applying layers of the construction material (9) onto the carrying device (5) or a layer previously formed, a metering device (8) for delivering the construction material (9) and at least one irradiation device (10) for irradiating layers of the construction material (9) at the positions corresponding to the respective cross-section of the object (6), wherein in the housing (2) a device (15) for section-wise preheating of sections of the construction material layer is provided, wherein the device (15) comprises at least one beam coupling device (16), with which a heating beam (17) provided for heating, especially preheating or heating up, of the construction material surface sections can be brought together with a main beam (18) effecting a solidification process, especially a sintering or melting process, of the construction material (9) such that both the heating beam (17) and the main beam (18) can together be guided over construction material surface sections to be heated or to be solidified, wherein the focus of the main beam (18) is arranged in that section in which the heating beam (17) hits the surface of the construction material (9); wherein
the heating beam (17) is either section-wise surrounding the main beam (18) provided for melting on or melting through or going ahead or following the main beam (18), wherein the main beam (18) and the heating beam (17) are together guidable synchronously along the surface of the construction material (9); **characterized in that**
the ratio of the beam splitting into the main beam (18) and the heating beam (17) as well as the spot sizes of the main beam (18) and the heating beam (17) on the construction material surface are variable during the process.

## Revendications

1. Procédé de fabrication additive d'un objet tridimensionnel (6) par solidification successive et sélective, couche par couche, de couches d'un matériau de construction (9) à l'aide d'au moins un faisceau d'énergie, la solidification successive et sélective du matériau de construction (9) étant effectuée en fonction d'un ensemble de données décrivant l'objet tridimensionnel à fabriquer de manière additive (6), des sections de matériau de construction prévues pour le frittage et/ou la fusion sur ou à travers étant chauffées dans une plage de température inférieure à la température de solidification du matériau de construction (9), dans lequel le chauffage de la ou des sections de matériau de construction est effectué par au moins un faisceau de chauffage (17), soit entourant par section au moins un faisceau principal (18) prévu pour la fusion sur ou à travers, soit allant devant ou suivant le faisceau principal (18), dans lequel le faisceau principal (18) et le faisceau de chauffage (17) sont guidés ensemble de manière synchrone le long de la surface du matériau de construction (9) ; **caractérisé en ce que** le rapport de la division du faisceau en faisceau principal (18) et faisceau de chauffage (17) ainsi que les tailles des points du faisceau principal (18) et du faisceau de chauffage (17) sur la surface du matériau de construction sont modifiés pendant le processus.

2. Procédé selon la revendication 1, **caractérisé en ce que** le faisceau chauffant (17) utilisé pour le chauffage, notamment pour le préchauffage ou le chauffage, est guidé coaxialement au faisceau principal (18).

3. Procédé selon la revendication 2, **caractérisé en ce que** le faisceau de chauffage (17) est obtenu à partir du faisceau principal (18) utilisé pour la fusion sur, la fusion vers ou la fusion à travers par extraction de faisceau.

4. Procédé selon l'une quelconque des revendications précédentes, **caractérisé en ce que** le faisceau de chauffage (17) est guidé à travers une optique d'expansion de faisceau après avoir divergé du faisceau principal (18).

5. Procédé selon la revendication 3 ou 4, **caractérisé en ce que** le faisceau de chauffage (17) est réuni au faisceau principal (18) dans un dispositif de couplage de faisceau (16).

6. Procédé selon l'une quelconque des revendications précédentes, **caractérisé en ce que** même scanner (12).

7. Procédé selon l'une quelconque des revendications précédentes, **caractérisé en ce que** le foyer du faisceau principal (18), situé dans la section d'irradiation du faisceau chauffant (17), est dirigé vers la surface du matériau de construction.

8. Procédé selon l'une quelconque des revendications précédentes, **caractérisé en ce que** la disposition du faisceau principal (18) et du faisceau chauffant (17) l'un dans l'autre est déplacée ou décentralisée sur la surface du matériau de construction de manière contrôlée par le procédé.

9. Procédé selon l'une quelconque des revendications précédentes, **caractérisé en ce que** la surface environnante de la surface du matériau de construction couverte par le faisceau chauffant (17) est plus grande, notamment au moins deux fois plus grande, que la surface sur la couche de matériau de construction couverte par le faisceau principal (18).

10. Procédé selon l'une quelconque des revendications précédentes, **caractérisé en ce qu'**exclusivement l'environnement direct du faisceau principal (18) est sélectivement chauffé par le faisceau chauffant (17) au moment du processus de solidification, notamment du processus de fusion ou de frittage.

11. Procédé selon l'une quelconque des revendications précédentes, **caractérisé en ce que** le faisceau principal (18) et le faisceau de chauffage (17) sont générés par des sources de faisceau différentes (11a, 11 b), leurs faisceaux sont réunis dans un dispositif de couplage de faisceau (16) avant de frapper le scanner (12).

12. Procédé selon la revendication 11, **caractérisé en ce que** la source de faisceau (11 a) du faisceau principal (18) et la source de faisceau (11 b) du faisceau de chauffage (17) irradient à des longueurs d'onde différentes.

13. Appareil (1) pour la mise en oeuvre du procédé selon l'une quelconque des revendications 1 à 12, comprenant un boîtier (2), une chambre de traitement (4) logée dans celui-ci et une chambre de construction (3), dans laquelle est disposé un dispositif de transport (5) avec un support (7) réglable en hauteur pour porter un objet à fabriquer (6), un dispositif d'application pour l'application de couches du matériau de construction (9) sur le dispositif de support (5) ou d'une couche préalablement formée, un dispositif de dosage (8) pour la distribution du matériau de construction (9) et au moins un dispositif d'irradiation (10) pour l'irradiation de couches du matériau de construction (9) aux positions correspondant à la section transversale respective de l'objet (6), un dispositif (15) pour le préchauffage par sections de sections du matériau de construction (9) étant logé dans le boîtier (2), le boîtier (2), un dispositif (15) pour le préchauffage par sections de sections de la couche de matériau de construction est prévu, dans lequel le dispositif (15) comprend au moins un dispositif de couplage de faisceau (16), avec lequel un faisceau de chauffage (17) prévu pour le chauffage, en particulier le préchauffage ou le chauffage, des sections de surface du matériau de construction peut être réuni avec un faisceau principal (18) effectuant un processus de solidification, en particulier un processus de frittage ou de fusion, du matériau de construction (9), de sorte qu'aussi bien le faisceau de chauffage (17) que le faisceau principal (18) peuvent être guidés ensemble sur des sections de surface du matériau de construction à chauffer ou à solidifier, le foyer du faisceau principal (18) étant disposé dans la section dans laquelle le faisceau de chauffage (17) frappe la surface du matériau de construction (9) ; dans lequel le faisceau de chauffage (17) est soit entouré par sections du faisceau principal (18) prévu pour fondre sur le faisceau principal (18), soit pour le traverser, soit pour le précéder ou le suivre, dans lequel le faisceau principal (18) et le faisceau de chauffage (17) peuvent être guidés ensemble de manière synchrone le long de la surface du matériau de construction (9) ; **caractérisé en ce que**
le rapport de la division du faisceau en faisceau principal (18) et faisceau de chauffage (17) ainsi que la taille des points du faisceau principal (18) et du faisceau de chauffage (17) sur la surface du matériau de construction sont variables pendant le processus.
